# EUROPÄISCHE PATENTSCHRIFT

(11) **EP 1 283 365 B1**
(45) Veröffentlichungstag und Bekanntmachung des Hinweises auf die Patenterteilung: **05.01.2005**
(21) Anmeldenummer: 02016844.9
(22) Anmeldetag: 29.07.2002
(51) Int. Cl.: F16H 61/42, F04B 49/00

(54) **Hydromotoreinheit mit Bremseinrichtung**
Hydraulic motor with integral brake
Moteur hydraulique avec frein intégré

(30) Priorität: 06.08.2001 DE 10138519
(43) Veröffentlichungstag der Anmeldung: 12.02.2003
(73) Patentinhaber: Brueninghaus Hydromatik GmbH, 89275 Elchingen (DE)
(72) Erfinder: Beck, Jochen, 89077 Ulm (DE)
(74) Vertreter: Körfer, Thomas, Dipl.-Phys.

(56) Entgegenhaltungen:
- DE-A- 4 307 002
- DE-C- 4 234 826
- US-A- 4 947 687
- US-A- 5 184 466
- PATENT ABSTRACTS OF JAPAN vol. 2000, no. 25, 31. August 2001 (2001-08-31) -& JP 2001 235032 A (KOMATSU LTD), 31. August 2001 (2001-08-31)
- PATENT ABSTRACTS OF JAPAN vol. 013, no. 065 (M-797), 14. Februar 1989 (1989-02-14) -& JP 63 266201 A (KOMATSU LTD), 2. November 1988 (1988-11-02)
- PATENT ABSTRACTS OF JAPAN vol. 015, no. 307 (M-1143), 6. August 1991 (1991-08-06) & JP 03 113168 A (HITACHI CONSTR MACH CO LTD), 14. Mai 1991 (1991-05-14)

## Beschreibung

Die Erfindung betrifft eine Hydromotoreinheit mit Bremseinrichtung nach der Gattung des Hauptanspruchs.

Verstellbare Hydromotoren, die über hydraulische Arbeitsleitungen mit einer Hydropumpe verbunden sind, die ihrerseits durch beispielsweise eine Dieselmaschine angetrieben wird, werden z.B. in hydrostatischen Fahrantrieben verwendet. Üblicherweise werden dort drehzahl- oder hochdruckabhängig gesteuerte Hydromotoren eingesetzt.

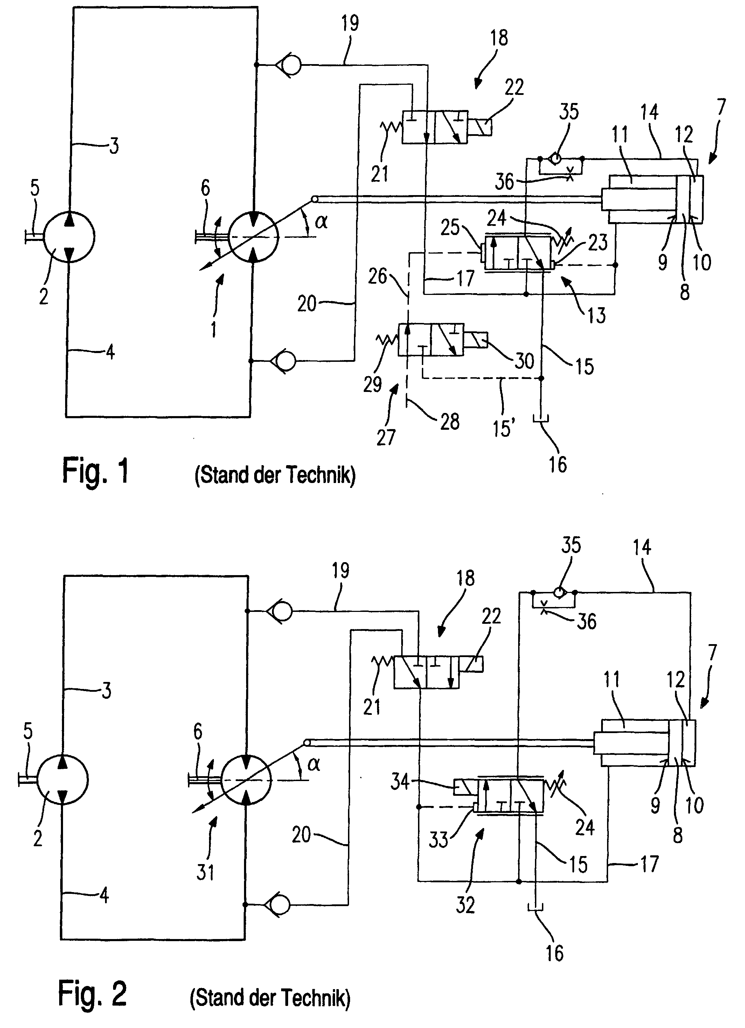

Die in den Figuren 1 und 2 dargestellten Grundschaltungen sind aus dem Prospekt "Verstellmotor A6VM, RD 91604/05.99", Seite 8/40 bzw. Seite 12/40, aus dem Jahre 1999 der Anmelderin bekannt. Die Einstellung des Schwenkwinkels des Hydromotors wird dort durch eine Verstelleinrichtung vorgenommen, in der ein Stellkolben angeordnet ist, dessen entgegengesetzten Kolbenflächen mit Drücken eines Zylinderrraums und eines Stelldruckraums beaufschlagt werden können. Das Druckmittel hierzu wird über ein Fahrtrichtungsventil jeweils der förderseitigen Arbeitsleitung, also fahrtrichtungsabhängig entnommen. Die Druckkammer der Verstelleinrichtung wird über das Fahrtrichtungsventil mit dem Druck der förderseitigen Arbeitsleitung bedrückt. In entgegengesetzter Richtung wirkt auf den Stellkolben ein Stelldruck, der über ein Stelldruckregelventil in einer Stelldruckkammer einstellbar ist. Je nach dem ob für den Hydromotor eine drehzahlabhängige oder hochdruckabhängige Steuerung vorgesehen ist, unterscheidet sich die Ansteuerung des Stelldruckregelventils. Bei der drehzahlabhängig geregelten Ausführung ist in der Steuerdruckzuleitung zu dem Stelldruckregelventil zusätzlich ein Steuerdruckschaltventil angeordnet.

US-A-4 947 687 offenbart eine Hydromotoreinheit gemäß dem Oberbegriff des Anspruchs 1.

Die bekannten Ausfuhrungsformen der Hydromotoreinheiten haben den Nachteil, daß bei einer Bergabfahrt, also dann, wenn der Hydromotor als Pumpe arbeitet und sich in den Arbeitsleitungen das Druckverhältnis umkehrt, die Hydromotoren in ihrem Schwenkwinkel so verstellt werden, daß kaum oder nur geringe Bremsleistung möglich ist.

Bei einem drehzahlabhängig geregelten Motor besteht die Möglichkeit, über das Steuerdruckschaltventil den maximalen Schwenkwinkel des Hydromotors einzustellen. Dadurch ergibt sich ein unerwünschter Stop-and-Go-Effekt, da das Fahrzeug über die große Bremsleistung bei maximalem Schwenkwinkel des Hydromotors so weit abgebremst wird, bis die Regelung eingreift und das Fahrzeug wieder beschleunigt. Durch das wiederholte Abbremsen und Beschleunigen läßt sich kein stabiler Fahrzustand erreichen.

Der Erfindung liegt deshalb die Aufgabe zugrunde, eine Hydromotoreinheit zu schaffen, bei der durch Einstellen eines definierten Schwenkwinkels des Hydromotors eine ausreichende Bremsleistung erzeugt wird.

Die Aufgabe wird durch die erfindungsgemäße Hydromotoreinheit nach Anspruch 1 gelöst.

Die erfindungsgemäße Hydromotoreinheit hat den Vorteil, daß auf den Stellkolben bei Druckumkehr in den Arbeitsleitungen eine Hubbegrenzung wirkt. Dadurch wird verhindert, daß bei einer Druckumkehr der Stellkolben in seine Endstellung gebracht wird.

Insbesondere ist dabei vorteilhaft, daß die Hubbegrenzung sowohl die Nachteile des drehzahlabhängig gesteuerten Hydromotors, als auch die Nachteile des hochdruckabhängig gesteuerten Hydromotors kompensiert. So kann für beide Motoren erreicht werden, daß bei Umkehrung des Druckverhältnisses in den Arbeitsleitungen, also im Schiebebetrieb des Fahrzeugs, der Schwenkwinkel des Hydromotors auf einen mittleren Wert eingestellt wird. Ein definierter Fahrzustand wird somit erreicht.

Mit den in den Unteransprüchen aufgeführten Maßnahmen sind vorteilhafte Weiterbildungen des erfindungsgemäßen Hydromotors möglich.

Anhand der nachfolgenden Zeichnungen werden zunächst der Stand der Technik und nachfolgend zwei Ausführungsbeispiele erfindungsgemäßer Hydromotoren beschrieben. Es zeigen:
- Fig. 1: einen hydraulischen Schaltplan eines drehzahlabhängig gesteuerten Hydromotors nach dem Stand der Technik;
- Fig. 2: einen hydraulischen Schaltplan eines hochdruckabhängig gesteuerten Hydromotors nach dem Stand der Technik;
- Fig. 3: einen hydraulischen Schaltplan einer erfindungsgemäßen Hydromotoreinheit mit drehzahlabhängiger Steuerung; und
- Fig. 4: einen hydraulischen Schaltplan einer erfindungsgemäßen Hydromotoreinheit mit hochdruckabhängiger Steuerung.

In Fig. 1 ist ein hydraulischer Schaltplan einer Hydromotoreinheit mit einem Hydromotor 1 nach dem Stand der Technik dargestellt. Der Hydromotor 1 ist mit einer Hydropumpe 2 über Arbeitsleitungen 3 und 4 verbindbar. Die Hydropumpe 2 wird über eine nicht dargestellte Antriebsmaschine, mit der sie über eine Welle 5 verbunden ist, angetrieben. Die Hydropumpe 2 ist für eine Förderung in beide Richtungen ausgelegt.

Über eine Abtriebswelle 6 treibt der Hydromotor 1 beispielsweise einen Radantrieb oder ein Drehwerk eines Baggers. Das Schluckvolumen des Hydromotors 1 ist über einen Schwenkwinkel α verstellbar. Die Einstellung des Schwenkwinkels α erfolgt über eine Verstelleinrichtung 7. Die Verstelleinrichtung 7 umfaßt einen Stellkolben 8, mit zwei entgegengesetzt gerichteten Kolbenflächen 9 und 10, so daß durch den in einem Zylinderraum 11 und einem Stelldruckraum 12 herrschenden Druck eine Kraft auf den Stellkolben 8 wirkt. Das Druckverhältnis zwischen dem Zylinderraum 11 und dem Stelldruckraum 12 ist durch den Stelldruck in dem Stelldruckraum 12 mittels eines Stelldruckregelventils 13 einstellbar.

Das Stelldruckregelventil 13 verbindet in einer ersten Endposition eine Stelldruckleitung 14 über eine Entspannungsleitung 15 mit einem Tank 16. In seiner zweiten Endposition ist die Stelldruckleitung 14 durch das Stelldruckregelventil 13 mit einer Verbindungsleitung 17 verbunden.

Die Arbeitsdruckleitung 17 ist über ein als Schaltventil ausgeführtes Fahrtrichtungsventil 18 in einer ersten Schaltposition über eine erste Zuleitung 19 mit der Arbeitsleitung 3 bzw. in der zweiten Schaltposition des Fahrtrichtungsventils 18 über eine zweite Zuleitung 20 mit der Arbeitsleitung 4 verbunden. Eine erste Schaltstellung des Fahrtrichtungsventils 18 ist durch eine Druckfeder 21 vorgegeben. Bei Bestromung eines Elektromagneten 22 wird das Fahrtrichtungsventil 18 in seine zweite Schaltposition gebracht.

Die Schaltstellung des Fahrtrichtungsventils 18 wird jeweils durch die Förderrichtung der Hydropumpe 2 vorgegeben. Dadurch wird die jeweils förderseitige bzw. mit Hochdruck beaufschlagte Arbeitsleitung 3 oder 4 mit der Arbeitsdruckleitung 17 verbunden. In dem Zylinderraum 11 liegt somit immer derjenige Druck an, der in der förderseitigen Arbeitsleitung 3 oder 4 herrscht.

Die Einstellung des Schwenkwinkels α erfolgt durch eine resultierende Kraft auf den Stellkolben 8. Das Stelldruckregelventil 13 kann hierzu zwischen seinen Endpositionen jede beliebige Zwischenstellung annehmen. In dem Stelldruckraum 12 ist daher ein Stelldruck einstellbar, der zwischen dem Druck des Tanks 16 und dem Druck in der Arbeitsdruckleitung 17 liegt. In der Stelldruckleitung 14 ist ein entgegen der Richtung des Stelldruckregelventils 13 öffnendes Rückschlagventil 35 angeordnet. Parallel dazu ist eine Drosselstelle 36 ausgebildet.

Zur Einstellung der Position des Stelldruckregelventils 13 wirkt der Druck in der Arbeitsdruckleitung 17 auf eine erste Meßfläche 23. Eine Kraft einer Druckfeder 24, welche einstellbar ausgeführt ist, wirkt in die gleiche Richtung. In entgegengesetzter Richtung wirkt auf eine zweite Meßfläche 25 ein Steuerdruck der Steuerdruckleitung 26. Die Steuerdruckleitung 26 ist über ein Schaltventil 27 mit einer Steuerdruckzuleitung 28 oder bei Betätigung eines einer Druckfeder 29 entgegenwirkenden Elektromagneten 30 mit einer weiteren Entspannungsleitung 15' verbindbar. Dadurch ist an der Meßfläche 25 entweder ein in der Steuerdruckzuleitung 28 anliegender Druck oder der Druck des Tankvolumens 16 wirksam. Der in der Steuerdruckzuleitung 28 verfügbare Druck ist drehzahlabhängig und wird durch eine nicht dargestellte Hilfspumpe, welche über die Welle 5 angetrieben wird, erzeugt.

In Fig. 2 ist ein hydraulischer Schaltplan nach dem Stand der Technik für eine hochdruckabhängig verstellbare Hydromotoreinheit mit einem Hydromotor 31 dargestellt. Für die nach Funktion und Aufbau identischen Bauteile werden die aus Fig. 1 bekannten Bezugszeichen verwendet.

Der in seinem Schwenkwinkel α verstellbare Hydromotor 31 wird über zwei Arbeitsleitungen 3 und 4 von einer Hydropumpe 2, die von einer Antriebswelle 5 angetrieben wird, mit Druckmittel versorgt. Die Arbeitsleitungen 3 und 4 sind über eine erste Verbindungsleitung 19 und eine zweite Verbindungsleitung 20 mit dem Fahrtrichtungsventil 18 verbunden, das über einen Elektromagneten 22 in zwei Positionen schaltbar ist, wobei eine erste Position durch die Druckfeder 21 vorgegeben ist. Durch das Fahrtrichtungsventil 18 wird die Arbeitsdruckleitung 17 mit der förderseitigen bzw. mit Hochdruck beaufschlagten Arbeitsleitung 3 oder 4 verbunden. Zum Einstellen eines Stelldrucks in dem Stelldruckraum 12 ist ein Stelldruckregelventil 32 vorgesehen, das nur eine Meßfläche 33 aufweist, die mit dem Druck in der Arbeitsdruckleitung 17 verbunden ist, so daß der auf die Meßfläche 33 wirkende Druck einer einstellbaren Druckfederkraft 24 entgegenwirkt. Weiterhin ist an dem Steuerdruckregelventil 32 ein Elektromagnet 34 angeordnet. Mittels des Elektromagneten 34 ist die Position, die sich durch den Druck an der Meßfläche 33 und die entgegengerichtet wirkende Druckfeder 24 ergibt, steuerbar. In der Stelldruckleitung 14 ist ein in Richtung des Stelldruckregelventils 32 öffnendes Rückschlagventil 35 angeordnet. Parallel dazu ist eine Drosselstelle 36 ausgebildet.

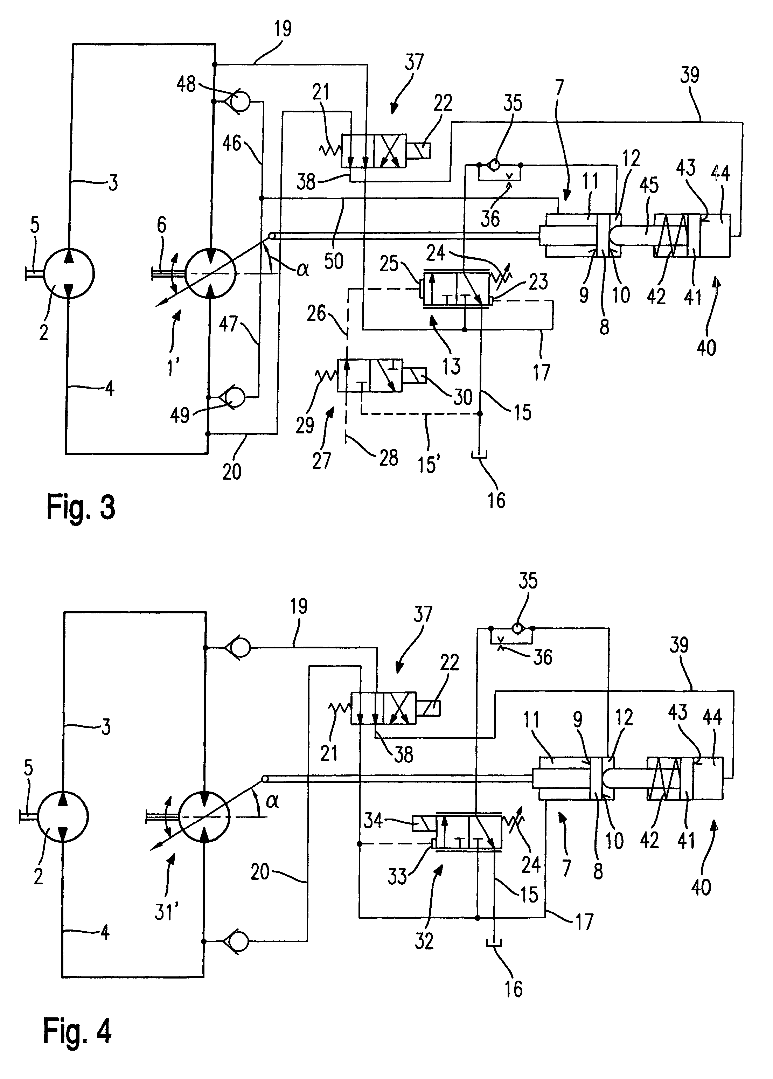

Die Wirkungsweise der vorstehend beschriebenen hydraulischen Schaltpläne soll nachfolgend anhand der in Fig. 3 und Fig. 4 dargestellten Ausführungsbeispiele erfindungsgemäßer Hydromotoreinheiten erläutert werden.

In Fig. 3 ist ein Ausführungsbeispiel eines erfindungsgemäßen Hydromotors 1' mit drehzahlabhängiger Regelung dargestellt. Die Arbeitsleitungen 3 und 4 sind über eine erste Verbindungsleitung 19 bzw. eine zweite Verbindungsleitung 20 mit einem Fahrtrichtungsventil 37 verbunden, das im Ausführungsbeispiel als 4/2-Wegeventil ausgeführt ist. Das Fahrtrichtungsventil 37 weist einen vierten Anschluß 38 auf, der mit einer Speiseleitung 39 verbunden ist. Ferner weist der Hydromotor 1' eine auf den Stellkolben 8 der Verstelleinrichtung 7 wirkende, variable Hubbegrenzung 40 auf.

Die Hubbegrenzung 40 umfaßt einen Hubbegrenzungskolben 41, der durch eine Druckfeder 42 in Richtung seiner Kolbenfläche 43 mit einer Kraft beaufschlagt ist. Auf die Kolbenfläche 43 des Hubbegrenzungskolbens 41 wirkt der in einem Speisedruckraum 44 herrschende Druck. Der Speisedruckraum 44 ist über die Speiseleitung 39 mit dem vierten Anschluß 38 des Fahrtrichtungsventil 37 verbunden. Das Fahrtrichtungsventil 37 ist wiederum als Schaltventil mit zwei Schaltpositionen ausgeführt. In einer ersten Schaltposition ist die erste Verbindungsleitung 19 mit der Arbeitsdruckleitung 17 sowie die zweite Verbindungsleitung 20 mit der Speiseleitung 39 verbunden.

Bei Betätigung des Elektromagneten 22, der entgegen der Kraft einer Druckfeder 21 arbeitet, wird das Fahrtrichtungsventil 37 in seine zweite Schaltposition gebracht. In der zweiten Schaltposition ist die erste Verbindungsleitung 19 mit der Speiseleitung 39 sowie die zweite Verbindungsleitung 20 mit der Arbeitsdruckleitung 17 verbunden.

Die Arbeitsleitungen 3 und 4 sind über eine dritte Verbindungsleitung 46 und eine vierte Verbindungsleitung 47 mit zwei Rückschlagventilen 48 und 49 verbunden. Die Rückschlagventile 48 und 49 öffnen in Richtung der dritten und vierten Verbindungsleitung 46 und 47. Über ein gemeinsames Leitungsstück 50 sind die dritte und vierte Verbindungsleitung 46 und 47 mit dem Zylinderraum 11 verbunden. In dem Zylinderraum 11 herrscht der jeweils höhere Druck der beiden Arbeitsleitungen 3 und 4.

Das Steuerdruckschaltventil 27 und das Stelldruckregelventil 13 entsprechen in Aufbau und Funktion der vorstehenden Beschreibung zu Fig. 1.

Bei normalem Fahrbetrieb wird die Arbeitsleitung 3 beispielsweise von der Hydropumpe 2 bedrückt, so daß in der förderseitigen Arbeitsleitung 3 Hochdruck herrscht und in der saugseitigen Arbeitsleitung 4 ein Niederdruck herrscht. Über das Rückschlagventil 48 und die dritte Verbindungsleitung 46 sowie das Leitungsstück 50 wird damit der Zylinderraum 11 aus der förderseitigen Arbeitsleitung 3 mit Druckmittel bedrückt. Über das Fahrtrichtungsventil 37 und die erste Verbindungsleitung 19 ist die Arbeitsdruckleitung 17 ebenfalls mit der förderseitigen Arbeitsleitung 3 verbunden. Der Speisedruckraum 44 steht über die zweite Verbindungsleitung 20, das Fahrtrichtungsventil 37, sowie die Speiseleitung 39 mit der saugseitigen Arbeitsleitung 4 in Verbindung. Der Speisedruckraum 44 ist drucklos. Die Druckfeder 42 kann damit den Hubbegrenzungskolben 41 entgegen dem geringen in dem Speisedruckraum 44 herrschenden Restdruck bewegen. Der Anschlag 45 entfernt sich von dem Stellkolben 8 und der Stellkolben 8 kann sowohl in Richtung großer als auch kleiner Schwenkwinkel α frei verstellt werden. Die Einstellung des Schwenkwinkels α erfolgt ausschließlich über die Druckverhältnisse in dem Zylinderraum 11 sowie in der Stelldruckkammer 12. Wie vorstehend bereits beschrieben, ist in der Stelldruckkammer 12 ein Stelldruck einstellbar, der zwischen dem Tankdruck und dem Druck der förderseitigen Arbeitsleitung 3 einstellbar ist. Der Stelldruck wird aufgrund der an den Meßflächen 23 und 25 anliegenden Drücke eingestellt.

Fährt das Fahrzeug bergab, so kehren sich die Druckverhältnisse in den Arbeitsleitungen 3 und 4 um. Die vorher saugseitige Arbeitsleitung 4 wird durch den von den Rädern angetriebenen Hydromotor 1', der nun als Pumpe wirkt, bedrückt, wodurch der dort herrschende Druck größer wird als der in der vorher förderseitigen Arbeitsleitung 3. Durch die parallele Anordnung der beiden Rückschlagventile 48 und 49 herrscht in dem Leitungsstück 50 der jeweils höhere der beiden Drücke der Arbeitsdruckleitungen 3 und 4. Der Zylinderraum 11 wird damit bei Bergabfahrt aus der saugseitigen Arbeitsleitung 4 mit Druckmittel bedrückt.

Das Fahrtrichtungsventil 37 dagegen wird ausschließlich in Abhängigkeit der Förderrichtung der Hydropumpe 2 geschaltet. In dem Stelldruckraum 12 kann dadurch maximal der Druck der förderseitigen Arbeitsleitung 3 eingestellt werden. Aufgrund des höheren in dem Zylinderraum 11 herrschenden Drucks wirkt auf den Stellkolben 8 eine resultierende Kraft, die den Stellkolben 8 in Richtung der Stelldruckkammer 12 bewegt. Der Schwenkwinkel α wird damit zunehmend in Richtung größeren Schluckvolumens verstellt.

Durch die Umkehrung der Druckverhältnisse in den Arbeitsleitungen 3 und 4 wird der Speisedruckraum 44 über die Speiseleitung 39 durch das Fahrtrichtungsventil 37 mit der vorher saugseitigen Arbeitsleitung 4 verbunden. Da in der vorher saugseitigen Arbeitsleitung 4 bei Druckumkehr der größere Druck herrscht, wird auch in dem Speiseraum 44 ein erhöhter Druck aufgebaut, der auf die Kolbenfläche 43 wirkt. Durch den Druckaufbau bewegt sich der Kolben 41 in Richtung des Stellkolbens 8, wobei er die Rückstellfeder 42 staucht. Der maximale Verfahrweg des Hubbegrenzungskolbens 41 kann beispielsweise durch eine nicht dargestellte Begrenzung auf einen bestimmten Schwenkwinkel eingestellt sein. Die Kolbenfläche 43 ist größer als die erste Kolbenfläche 9 des Stellkolbens 8 und auf beide Kolbenflächen 9 und 43 wirkt ein gleich großer Druck aus der saugseitigen Arbeitsleitung 4, so daß der Stellkolben 8 lediglich so weit in Richtung großer Schwenkwinkel verstellt werden kann, bis seine Bewegung durch den Anschlag 45 begrenzt ist.

Durch die so begrenzte Verstellung des Stellkolbens 8 in Richtung großer Schwenkwinkel α wird verhindert, daß ein Überbremsen des Fahrzeugs auftritt, das von einem Wiederbeschleunigen gefolgt wäre.

Ist das Ende einer Bergabfahrt erreicht, so kehrt das Druckverhältnis der beiden Arbeitsleitungen 3 und 4 wieder um. Der Druck in der förderseitigen Arbeitsleitung 3 ist damit wiederum größer als in der saugseitigen Arbeitsleitung 4. Das zuvor geöffnete Rückschlagventil 49 schließt sich und der Zylinderraum 11 wird wieder aus der förderseitigen Arbeitsleitung 3 bedrückt. Der Speisedruckraum 44 ist weiterhin mit der saugseitigen Arbeitsleitung 4 verbunden, so daß der Druck, der auf die Kolbenfläche 43 wirkt, sinkt. Der Hubbegrenzungskolben 41 mitsamt dem Anschlag 45 wird daher durch die Rückstellfeder 42 wieder in seine Ausgangsposition zurückgedrängt. Der mögliche Verstellweg des Stellkolbens 8 reicht wieder bis zum maximal möglichen Schwenkwinkel α.

Bei einer Umkehrung der Fahrtrichtung, die gleich bedeutend ist mit einer geänderten Förderrichtung der Hydropumpe 2, wird die Arbeitsleitung 4 zur förderseitigen Arbeitsleitung und die Arbeitsleitung 3 zur saugseitigen Arbeitsleitung. Gleichzeitig wird durch Betätigung des Elektromagneten 22 das Fahrtrichtungsventil 27 in seine zweite Schaltposition gebracht.

Die Funktion der Hubbegrenzung 40 in Bezug auf einer. hochdruckabhängig geregelten Hydromotor 31' von Fig. 4 sei am Beispiel der Arbeitsleitung 4 als förderseitiger Arbeitsleitung erläutert. Die förderseitige Arbeitsleitung 4 ist über die zweite Verbindungsleitung 20 und das Fahrtrichtungsventil 27 mit der Arbeitsdruckleitung 17 verbunden. Die saugseitige Arbeitsleitung 3 ist über die erste Verbindungsleitung 19 und das Fahrtrichtungsventil 37 und über den vierten Anschluß 38 sowie die Speiseleitung 39 mit dem Speisedruckraum 44 der Hubbegrenzung 40 verbunden. Der Speisedruckraum 44 ist daher drucklos und die Rückstellfeder 42 drückt den Hubbegrenzungskolben 41 in seine Ruheposition. Die Meßfläche 33 des Stelldruckregelventils 32 ist mit der förderseitigen Arbeitsleitung 4 verbunden und stellt den Stelldruck in der Stelldruckkammer 12 in Abhängigkeit von dem dort anliegenden Druck ein. Erfolgt nun eine Druckumkehr in den Arbeitsleitungen 3 und 4, so wird bei dem damit verbundenen Absinken des Drucks an der Meßfläche 33 unter einen bestimmten Schwellwert das Stelldruckregelventil 32 so betätigt, daß die Stelldruckkammer 12 über die Entspannungsleitung 15 mit dem Tank 16 verbunden wird. Der Stelldruck in der Stelldruckkammer 12 sinkt damit auf das Niveau des Tankdrucks. Der Stellkolben 8 wird damit durch den in dem Zylinderraum 12 herrschenden Restdruck in Richtung der Stelldruckkammer 12 verstellt. Bei einem hochdruckabhängig geregelten Hydromotor 31' entspricht dies einer Verstellung in Richtung kleiner Schwenkwinkel. Eine Abnahme der Bremsleistung wäre somit die Folge. Um dies zu verhindern, wird über den Anschlag 45 der Verstellkolben 8 auf einen vorgegebenen Schwenkwinkel gestellt.

Wie vorstehend zu Fig. 3 beschrieben wird über eine Speiseleitung 39 der Speisedruckraum 44 aus der nun Druck führenden, vorher saugseitigen Arbeitsleitung 3 bedrückt. Der Hubbegrenzungskolben 41 wird somit entgegen der Kraft der Rückstellfeder 42 bewegt, womit durch den sich ir. Anlage mit der zweiten Kolbenfläche 10 des Stellkolbens 8 befindlichen Anschlag 45 der Schwenkwinkel α des Hydromotors 31' vergrößert wird. Über eine Begrenzung des Verfahrwegs des Hubbegrenzungskolbens 41 ist ein definierter Stellweg wiederum einstellbar.

Mit der erfindungsgemäßen Ausführung einer auf den Stellkolben 8 wirkenden Hubbegrenzung 40 läßt sich sowohl für einen hochdruckabhängig gesteuerten Hydromotor 31' als auch für einen drehzahlabhänig gesteuerten Hydromotor 1' ein mittlerer Schwenkwinkel α bei Druckumkehr in den Arbeitsleitungen 3, 4 einstellen, so daß die Hydromotoren 1' und 31' eine definierte Bremsleistung erfahren und das Fahrzeug sich damit in einem stabilen Fahrzustand befindet.

## Patentansprüche

1. Hydromotoreinheit mit einem Hydromotor (1', 31'), der mit zwei Arbeitsleitungen (3, 4) verbindbar ist, wobei der Schwenkwinkel (α) des Hydromotors (1', 31') durch eine Verstelleinrichtung (7) verstellbar ist, die einen Stellkolben (8) mit zwei Kolbenflächen (9, 10) aufweist, wobei der auf eine erste Kolbenfläche (10) in einem Stelldruckraum (12) wirkende Stelldruck durch ein Stelldruckregelventil (13, 32) einstellbar ist und wobei der für die Stelleinrichtung (7) maximal verfügbare Druck durch ein Fahrtrichtungsventil (37) der mit Hochdruck beaufschlagten Arbeitsleitung (3, 4) entnommen wird,
**dadurch gekennzeichnet,**
**daß** zur Einstellung eines definierten Schwenkwinkels (α) des Hydromotors (1', 31') bei Druckumkehr in den Arbeitsleitungen (3, 4) der Stellweg des Stellkolbens (8) in Richtung großer Schwenkwinkel durch eine auf den Stellkolben (8) wirkende variable Hubbegrenzung (40) begrenzt ist.

2. Hydromotoreinheit nach Anspruch 1,
**dadurch gekennzeichnet,**
**daß** die Hubbegrenzung (40) durch einen Druck auf einer Hubbegrenzungskolben (41) in einem Speisedruckraum (44) hydraulisch betätigbar ist.

3. Hydromotoreinheit nach Anspruch 2,
**dadurch gekennzeichnet,**
d**aß** der Speisedruckraum (44) über das Fahrtrichtungsventil (37) mit der bezüglich der mit Niederdruck beaufschlagte Arbeitsleitung (3, 4) verbunder. ist.

4. Hydromotoreinheit nach einem der Ansprüche 1 bis 3,
**dadurch gekennzeichnet,**
**daß** der maximale Verfahrweg des Hubbegrenzungskolbens (41) durch einen Anschlag fest einstellbar ist.

5. Hydromotoreinheit nach einem der Ansprüche 1 bis 4,
**dadurch gekennzeichnet,**
**daß** der Hubbegrenzungskolben (41) durch eine Druckfeder (42) entgegen dem in dem Speisedruckraum (44) herrschenden Druck mit einer Kraft beaufschlagt ist.

6. Hydromotoreinheit nach einem der Ansprüche 1 bis 5,
**dadurch gekennzeichnet,**
**daß** die dem Stelldruck entgegengesetzt wirkende Kolbenfläche (9) mit jeweils derjenigen Arbeitsleitung (3, 4) verbunden ist, in der der größere Druck herrscht.

7. Hydromotoreinheit nach einem der Ansprüche 1 bis 6,
**dadurch gekennzeichnet,**
**daß** das Fahrtrichtungsventil (37) ein elektromagnetisch betätigbares 4/2-Wegeventil ist.

## Claims

1. Hydraulic motor unit with a hydraulic motor (1', 31') which can be connected to two working lines (3, 4), the pivoting angle (α) of the hydraulic motor (1', 31') being adjustable by an adjustment device (7), which has a positioning piston (8) with two piston surfaces (9, 10), the positioning pressure which acts on a first piston surface (10) in a positioning pressure chamber (12) being adjustable by a positioning pressure control valve (13, 32), and the maximum available pressure for the positioning device (7) being bled through a direction of motion valve (37) of the working line (3, 4) to which high pressure has been applied,
**characterized in that**
to set a defined pivoting angle (α) of the hydraulic motor (1', 31') in the case of pressure reversal in the working lines (3, 4), the positioning distance of the positioning piston (8) in the direction of large pivoting angles is restricted by a variable stroke restriction (40) which acts on the positioning piston (8).

2. Hydraulic motor unit according to Claim 1,
**characterized in that**
the stroke restriction (40) can be actuated hydraulically by pressure on a stroke restriction piston (41) in a feed pressure chamber (44).

3. Hydraulic motor unit according to Claim 2,
**characterized in that**
the feed pressure chamber (44) is connected via the direction of motion valve (37) to the working line (3, 4), to which low pressure is applied.

4. Hydraulic motor unit according to one of Claims 1 to 3,
**characterized in that**
the maximum traversed distance of the stroke restriction piston (41) can be permanently set by a limit stop.

5. Hydraulic motor unit according to one of Claims 1 to 4,
**characterized in that**
a force is applied to the stroke restriction piston (41) by a compression spring (42), against the pressure in the feed pressure chamber (44).

6. Hydraulic motor unit according to one of Claims 1 to 5,
**characterized in that**
the piston surface (9) which acts against the positioning pressure is connected to that working line (3, 4) in which the pressure is greater.

7. Hydraulic motor unit according to one of Claims 1 to 6,
**characterized in that**
the direction of motion valve (37) is a 4/2-way valve which can be actuated electromagnetically.

## Revendications

1. Bloc moteur hydraulique, comprenant un hydromoteur (1', 31') pouvant être raccordé à deux conduites de service (3, 4), dans lequel l'angle de pivotement (α) de l'hydromoteur (1', 31') est réglable par un dispositif de réglage (7) qui présente un piston de commande (8) avec deux surfaces de piston (9, 10), dans lequel la pression de commande agissant sur une première surface de piston (10) dans une chambre de pression de commande (12) est ajustable par une vanne de régulation de pression de commande (13, 32), et dans lequel la pression disponible maximale pour le dispositif de commande (7) est prélevée par une vanne dans le sens de la marche (37) dans la conduite de service (3, 4) sollicitée par une haute pression, **caractérisé en ce que** pour l'ajustement d'un angle de pivotement (α) défini de l'hydromoteur (1', 31'), en cas d'inversion de pression dans les conduites de service (3, 4), la course de commande du piston de commande (8) est limitée en direction de grands angles de pivotement par un limiteur de course variable (40) agissant sur le piston de commande (8).

2. Bloc moteur hydraulique selon la revendication 1, **caractérisé en ce que** le limiteur de course (40) peut être actionné de façon hydraulique par une pression sur un piston de limitation de course (41) dans une chambre de pression d'alimentation (44).

3. Bloc moteur hydraulique selon la revendication 2, **caractérisé en ce que** la chambre de pression d'alimentation (44) est raccordée par l'intermédiaire de la vanne dans le sens de la marche (37) à la conduite de service (3, 4) sollicitée par une basse pression.

4. Bloc moteur hydraulique selon l'une quelconque des revendications 1 à 3, **caractérisé en ce que** le déplacement maximal du piston de limitation de course (41) peut être ajusté définitivement par une butée.

5. Bloc moteur hydraulique selon l'une quelconque des revendications 1 à 4, **caractérisé en ce que** le piston de limitation de course (41) est sollicité par une force à l'aide d'un ressort de pression (42) contre la pression régnant dans la chambre de pression d'alimentation (44).

6. Bloc moteur hydraulique selon l'une quelconque des revendications 1 à 5, **caractérisé en ce que** la surface de piston (9) agissant contre la pression de commande est raccordée respectivement à la conduite de service (3, 4) dans laquelle règne la plus grande pression.

7. Bloc moteur hydraulique selon l'une quelconque des revendications 1 à 6, **caractérisé en ce que** la vanne dans le sens de la marche (37) est un distributeur 4/2 voies à commande électromagnétique.
